# EUROPÄISCHE PATENTSCHRIFT

(11) **EP 0 595 158 B1**
(45) Veröffentlichungstag und Bekanntmachung des Hinweises auf die Patenterteilung: **17.09.1997**
(21) Anmeldenummer: 93116830.6
(22) Anmeldetag: 19.10.1993
(51) Int. Cl.: B29C 49/20

(54) **Verfahren und Vorrichtung zum Herstellen von Hohlkörpern aus thermoplastischem Kunststoff**
Method and apparatus for making hollow articles from thermoplastic material
Procédé et dispositif de fabrication de corps creux en matière thermoplastique

(30) Priorität: 28.10.1992 DE 4236439
(43) Veröffentlichungstag der Anmeldung: 04.05.1994
(73) Patentinhaber: Krupp Kautex Maschinenbau GmbH, 53229 Bonn (DE)
(72) Erfinder: Daubenbüchel, Werner, Dipl.-Ing., D-51429 Bergisch-Gladbach (DE); Jira, Alfred, D-53639 Königswinter (DE)
(74) Vertreter: Koepsell, Helmut, Dipl.-Ing.

(56) Entgegenhaltungen:
- DE-A- 2 613 735
- DE-C- 757 045
- DE-C- 3 742 993
- DE-U- 1 852 986
- PATENT ABSTRACTS OF JAPAN vol. 16, no. 94 (M-1219)9. März 1992 & JP-A-03 274 124 (MITSUBISHI MATERIALS)

## Beschreibung

Die Erfindung betrifft ein Verfahren und eine Vorrichtung zum Herstellen von Hohlkörpern aus thermoplastischem Kunststoff im Extrusions-Blasverfahren gemäß dem Oberbegriff des Anspruches 1 bzw. dem des Anspruches 12.

Da das Blasverfahren bezüglich der Formgebung beim Aufweiten des Vorformlings in der Blasform zum aufgeweiteten Hohlkörper gewissen Einschränkungen unterliegt, ist es seit langem bekannt, bezüglich ihrer Form und ihrer Ausgestaltung kompliziertere Erzeugnisse im Blasverfahren in der Weise herzustellen, daß wenigstens ein gesondert hergestelltes Zusatzteil in die Blasform eingelegt wird, bevor diese um den Vorformling geschlossen wird, worauf dann beim anschließenden Aufweitvorgang eine Verbindung zwischen dem Vorformling bzw. dem daraus im Zuge des Aufweitvorganges sich bildenden Hohlkörper und diesem Zusatzteil hergestellt wird derart, daß Teile der Oberfläche des Zusatzteils mit einem Teilbereich der Oberfläche des Vorformlings bzw. des daraus gebildeten Hohlkörpres eine Verbindung eingehen. In der Mehrzahl der Fälle bestehen Vorformling und Zusatzteil aus dem gleichen Kunststoffmaterial, so daß, da der Vorformling sich beim Aufweitvorgang in warmplastischem Zustand befindet und somit eine Temperatur aufweist, die die Bildung einer Schweißverbindung ermöglicht, das Anbringen des Zusatzteils am Hohlkörper durch eine derartige Schweißverbindung bewirkt werden kann. Dabei wird im all gemeinen in Abhängigkeit von dem Kunststoff, aus welchem der Vorformling besteht, und dessen Wanddicke ein Teil des Wärmeinhaltes des Vorformlings auch dazu benutzt, das Zusatzteil auf eine Temperatur zu bringen, die das Entstehen einer guten Schweißverbindung ermöglicht. In vielen Fällen wird dabei so vorgegangen, daß der Vorformling mit einer Temperatur gebildet wird, die höher ist als für das anschließende Aufweiten in der Blasform und das Bilden von Schweißnähten zum Verschließen des Vorformlings erforderlich wäre, um so zusätzlich Wärme verfügbar zu machen, die beim Kontakt zwischen dem aufgeweiteten Vorformling und dem Zusatzteil letzteres an seiner Kontaktfläche auf eine Temperatur bringt, die hoch genug ist, um auch ein Plastifizieren des Zusatzteils in der die Kontaktflächen tragenden Grenzschicht zu bewirken. Normalerweise ist auf diese Weise das Anbringen solcher vorgefertigter Zusatzteile beispielsweise aus Polyäthylen an Blaskörpern, die ebenfalls aus Polyäthylen bestehen, ohne weiteres möglich.

Auch ist es bekannt, die Zusatzteile vorzuwärmen, wenn der Wärmeinhalt des Vorformings nicht ausreicht, um eine einwandfreie Schweißverbindung zu bewirken. In den Fällen, in denen die Vorerwärmung jedoch zur Plastifizierung der zu verschweißenden Flächen führt, wird die Handhabung des Zusatzteiles beim Einbringen in den Sitz der Blasform erschwert.

Ein Hohlkörper mit daran angebrachten Zusatzteilen ist z. B. in DE-GMS 1 852 986 offenbart.

Im Zuge der in den letzten Jahren erfolgenden Ausweitung der Anwendung des Blasverfahrens werden zunehmend auch Kunststoffe verwendet, die schwieriger zu verarbeiten sind, und zwar auch in der Hinsicht, daß ein Anbringen eines Zusatzteiles am Hohlkörper in der vorbeschriebenen einfachen Weise nicht immer zur Entstehung von ausreichend festen Schweißverbindungen führt. Dies kann einmal darauf zurückzuführen sein, daß derartige Kunststoffe, bei denen es sich beispielsweise um thermoplastische Elastomere handeln kann, bei der Plastifizierung, also der Verarbeitung im Extruder, das Einhalten viel engerer Temperaturgrenzen erfordern, so daß keine Möglichkeit besteht, durch Wahl einer höheren Temperatur für den Vorformling die für die Herstellung einer ausreichend festen Schweißverbindung erforderliche Wärme aufzubringen. Ein anderes Problem kann bei derartigen Kunststoffen darin bestehen, daß sie an ihren Oberflächen in warmplastischem Zustand zur Oxidation neigen, wodurch an der Oberfläche eine Schicht entsteht, die auch bei an sich günstigen Bedingungen bezüglich Temperatur, Druck und Zeit die Bildung einer Schweißverbindung mit ausreichender Festigkeit erschwert oder sogar unmöglich macht. Zwar wird, falls nicht unter inerter Atmosphäre gearbeitet wird, eine gewisse Oxidation beispielsweise der Oberflächen des Vorformlings durch den Luftsauerstoff kaum vermeidbar sein, wobei, da das Ausmaß dieser Oxidation jedoch im wesentlichen von der Zeit abhängt, durch entsprechende Verfahrensführung - schnelle Herstellung des Vorformlings - die Entstehung einer der Bildung einer Schweißverbindung entgegenwirkenden Oxidationsschicht auf den Oberflächen des Vorformlings vermieden werden kann. Dies ist jedoch bei Vorerwärmung des Zusatzteils - es sei denn, auch diese erfolgte unter inerter Atmosphäre - nicht immer möglich, wobei noch die bereits erwähnten Erschwernisse bei der Handhabung eines bis zur Plastifizierung vorerwärmten Zusatzteiles hinzukommen. Andererseits wird jedoch eine derartige Vorerwärmung in jenen Fällen notwendig sein, bei welchen die für die Herstellung einer Schweißverbindung erforderliche Wärme im Gegensatz zu den vorbeschriebenen bekannten Verfahren durch den Vorformling allein nicht mehr aufgebracht werden kann. Dies wird insbesondere dann gelten, wenn das den Vorformling bildende Material das bereits erwähnte Einhalten engerer Temperaturgrenzen erfordert.

Demzufolge liegt der Erfindung die Aufgabe zugrunde, Verfahren und Vorrichtung der einleitend beschriebenen Art so auszugestalten, daß auch bei Vorliegen ungünstiger Umstände, beispielsweise bezüglich der zu verwendenden Kunststoffmaterialien und der einzuhaltenden engsten Temperaturgrenzen, die vorgefertigten Zusatzteile eine ausreichend feste Schweißverbindung mit dem Hohlkörper eingehen, und zwar unabhängig vom Wärmeinhalt der Vorformlinge, der Beschaffenheit und der Gestalt der Zusatzteile und unabhängig von der Ausgestaltung der verwendeten Blasform. D. h., daß letztere nicht in besonderer Weise für die Anwendung der Lehre gemäß der Erfindung vorbereitet oder ausgestaltet sein muß. Ferner wird angestrebt, daß durch die Anwendung der Lehre gemäß der Erfindung der Verfahrensablauf bei der Herstellung der Hohlkörper keine oder jedenfalls keine ins Gewicht fallende Verzögerung erfährt.

Diese Aufgabe wird unter Anwendung der im Kennzeichen des Anspruches 1 bzw. des Anspruches 12 angeführten Merkmale gelöst.

Durch die Verwendung eines Heizelementes, welches mit dem bereits im Sitz in der Blasform befindlichen Zusatzteil in Berührung gebracht wird, besteht die Möglichkeit eines direkten Wärmeüberganges vom Heizelement auf jenen Oberflächenbereich des Zusatzteiles, der mit dem Vorformling bzw. dem daraus herzustellenden Hohlkörper unter der Einwirkung des Blasdruckes eine feste Haftverbindung, bei der es sich normalerweise um eine Schweißverbindung handeln wird, eingehen soll. Dabei sollte die Topographie der Heizfläche des Heizelementes sowie dessen Kontur an die Topographie und die Kontur der zu erwärmenden Fläche des Zusatzteiles angepasst sein, um so einen möglichst guten Wärmeübergang zu bewirken. Dies hat einmal den Vorteil, daß vom Heizelement Wärme im wesentlichen nur an die mit der Heizfläche in Berührung befindliche Oberfläche des Zusatzteiles abgegeben wird. Die das Zusatzteil umgebende Bereiche der Innenwandung der Blasform bleiben so durch die Wärmeabgabe des Heizelementes im wesentlichen unbeeinflußt, so daß sie keine Erwärmung erfahren. Dies ist deshalb vorteilhaft, weil nach dem Aufweiten des Vorformlings zur endgültigen Gestalt des Hohlkörpers dieser eine Abkühlung erfahren muß, die zu einer Verfestigung des Kunststoffmaterials führt, so daß der Hohlkörper nach ausreichender Abkühlung im Bedarfsfall selbsttragend ist. Es bedarf keiner näheren Erläuterung, daß die Zeit, die für diesen Abkühlvorgang benötigt wird, die Produktivität der Blasform in ganz erheblichem Maße beeinflußt. Eine Erwärmung von Teilen der Blasformwandung durch die Erwärmung des Zusatzteiles bzw. durch dazu verwendete Heizelemente, z.B. bei Verwendung von Heizstrahlern, würde zu einer Verlängerung der Kühlzeit und damit zu einer Verringerung der Produktivität führen.

Der direkte Kontakt zwischen Heizfläche des Heizelementes und dem mit dem Hohlkörper zu verbindenden Oberflächenbereich des Zusatzteiles hat zudem den Vorteil, daß der Wärmeübergang zwecks Erreichen einer bestimmten Temperatur genau dosiert werden kann, um so den thermischen Eigenschaften des das Zusatzteil bildenden Materials Rechnung zu tragen. Über die Temperatur der Heizfläche und die Dauer des Heizvorganges können somit die Endtemperatur des zu erwärmenden Bereiches des Zusatzteiles und auch die Tiefe dieses Bereiches genau eingestellt werden. Dies ist deshalb wichtig, weil, wie bereits erwähnt, in vielen Fällen enge Temperaturgrenzen eingehalten werden müssen, innerhalb welcher der angestrebte Effekt, also insbesondere die Plastifizierung oder Erweichung des die Verbindung mit dem Hohlkörper eingehenden Oberflächenbereiches des Zusatzteiles eintritt, um andere Eigenschaften dieses Materials beeinträchtigende Beeinflussungen, beispielsweise durch zu hohe Temperatur oder zu lange Erwärmung, auszuschließen. Da das Ausmaß des Wärmeübergangs von der Heizfläche des Heizelementes auf das Zusatzteil im wesentlichen von der Temperatur der Heizfläche und der Zeit der Einwirkung des Heizelementes auf das Zusatzteil abhängt, ist es somit ohne weiteres möglich, über diese beiden Faktoren, also Temperatur und Zeit, den Zustand des Zusatzteiles am Ende der Wärmebehandlung zu bestimmen. Dabei kann die eine Plastifizierung bewirkende Erwärmung des Zusatzteiles auf eine Schichtdicke beschränkt bleiben, deren Plastifizierung zur Herstellung der gewünschten Verbindung erforderlich ist.

Ein weiterer Vorteil des direkten Kontaktes zwischen der Oberfläche des Heizelementes und dem zu erwärmenden Bereich des Zusatzteiles besteht darin, daß insbesondere dann, wenn die Heizfläche des Heizelementes an die Kontur und/oder die Topographie dieses Oberflächenbereiches angepaßt ist, letzterer gegenüber der umgebenden Atmosphäre abgeschirmt ist, so daß ein Oxidieren des Oberflächenbereiches im Zuge der Erwärmung nicht eintreten kann, solange die Heizfläche an diesem Oberflächenbereich anliegt. Selbstverständlich ist es erforderlich, das Heizelement aus der Blasform und damit vom zu erwärmenden Zusatzteil zu entfernen, bevor die im allgemeinen zweiteilige Blasform geschlossen wird, wobei während der Zeit, die für das Entfernen des Heizelementes und für das Schließen der Blasformhälften erforderlich ist, der Luftsauerstoff auf die erwärmte Oberfläche des Zusatzteiles zur Einwirkung kommt. Diese Zeit ist jedoch zu kurz, als daß eine Oxidation in einem Ausmaß eintreten könnte, die zu einer merklichen Beeinflussung der Oberfläche im Sinne einer Verschlechterung der herzustellenden Haft- bzw. Schweißverbindung führen könnte. Das Aufweiten des Vorformlings innerhalb der geschlossenen Blasform erfolgt dann so schnell, daß die dafür erforderliche Zeit ohnehin nicht ins Gewicht fällt. Es ist daher anzustreben, das Heizelement nicht eher vom Zusatzteil wegzubewegen, als dies für den normalen Verfahrensablauf erforderlich ist. D.h, daß das Entfernen des Heizelementes vom Zusatzteil nach Möglichkeit unmittelbar vor dem Schließen der Blasform erfolgen sollte. Anderereits besteht die Möglichkeit, sofort nach dem Entfernen des aufgeweiteten und ausreichend verfestigten Hohlkörpers aus der geöffneten Blasform das Zusatzteil für den nächsten Arbeitsgang in die Blasform einzulegen und mit dem Erwärmen desselben zu beginnen. Die Aufheizzeit kann in Abhängigkeit von der Größe des Zusatzteiles und dem Material, aus welchem dieses besteht, 20 bis mehr als 60 Sekunden dauern. Dies kann zur Folge haben, daß in manchen Anwendungsfällen auch die Notwendigkeit besteht, die Zykluszeit für die Herstellung eines Hohlkörpers an die für die Aufheizung des Zusatzteils erforderliche Zeit anzupassen. Dies kann bedeuten, daß die Zykluszeit um die Zeit verlängert werden muß, die für das Aufwärmen des Zusatzteiles erforderlich ist.

Da jedoch aus Gründen der Produktivität anzustreben ist, daß die für das Erwärmen des Zusatzteiles erforderliche Zeit jene Zeit, während welcher die Blasform ohnehin offen ist, zumindest nicht merklich überschreitet, kann es vorteilhaft sein, die für den Transport des Zusatzteils in die Blasform und in den darin befindlichen Sitz erforderliche Zeit für die Erwärmung des Zusatzteiles zu nutzen. Dies kann dadurch erreicht werden, daß dem Heizelement ein Halter für das Zusatzteil zugeordnet ist und Heizelement und Halter so zueinander angeordnet sind, daß bei auf dem Halter befindlichen Zusatzteil das Heizelement an diesem bereits zur Anlage gebracht werden kann und somit das Zusatzteil aufheizt. Darüberhinaus kann es zweckmäßig sein, das Zusatzteil außerhalb der Blasform vorzuwärmen, ohne daß dabei bereits eine Plastifizierung oder sonstige die Handhabung des Zusatzteiles erschwerende Veränderung seiner Beschaffenheit eintritt. D.h., daß bei der Vorwärmung eine bestimmte obere Temperaturgrenze nicht überschritten werden sollte. Diese wird jedoch selbst bei Einhalten der vorgenannten Bedingungen so hoch liegen, daß durch das Vorwärmen die dann noch in der Blasform durchzuführende Erwärmung auf eine Temperatur, die die Herstellung einer guten Verbindung gewährleistet, eine Zeit beansprucht, die wesentlich kürzer ist als es der Fall wäre, wenn das Zusatzteil in der Blasform und ggf. bereits während des Transports von der Umgebungstemperatur auf die Endtemperatur durch das Heizelement zu erwärmen wäre. Mithin dient das Vorerwärmen auch dazu, eine Beeinträchtigung der Produktivität der Blasform nach Möglichkeit zu vermeiden. Dieses Vorerwärmen begünstigt auch die Möglichkeit, die Erwärmung des Zusatzteiles schonend, d.h. unter Berücksichtigung der Materialeigenschaften desselben durchzuführen, da insgesamt mehr Zeit zur Verfügung steht, um die für die Herstellung einer guten Schweißverbindung erforderliche Endtemperatur zu erreichen.

Im übrigen kann es bei Verarbeiten von schwierigeren Materialien, wie beispielsweise thermoplastischen Elastomeren (TPE), z. B. elastomermodifiziertem Polypropylen, vorteilhaft sein, einen etwas höheren Blasdruck für das Aufweiten des Vorformlings bzw. das anschließende Kühlen des aus dem Vorformling aufgeweiteten Hohlkörpers vorzusehen. Normalerweise wird beim Extrusions-Blasverfahren mit einem inneren Blasdruck von 8 - 10 bar gearbeitet. Es kann bei Anwendung des Verfahrens gemäß der Erfindung zweckmäßig sein, mit einem Blasdruck von mehr als 10 bar, beispielsweise 14 - 15 bar, zu arbeiten, um dadurch die Schweißverbindung unter höherem Druck entstehen zu lassen. Der Druck, mit dem die beiden miteinander zu verbindenden Teile gegeneinander gepreßt werden, ist neben Temperatur und der Dauer, während welcher der Druck zur Anwendung kommt, eine wesentliche Einflußgröße für die Qualität einer Schweißverbindung.

In der Zeichnung sind einige Ausführungsbeispiele der Erfindung dargestellt. Es zeigen:
- Fig. 1: das Schema einer Extrusions-Blasvorrichtung in einer Ansicht in Richtung der Pfeile I-I der Fig. 2, jedoch ohne Heizeinrichtung,
- Fig. 2: die zugehörige Draufsicht, teilweise im Schnitt, mit Heizeinrichtung,
- Fig. 3a-f: einen Längsschnitt durch ein Blasformteil mit zugeordneter Transport- und Heizeinrichtung in sechs aufeinanderfolgenden Phasen eines Arbeitszyklus',
- Fig. 4: einen Ausschnitt aus einem Blasformteil mit zugehöriger Heiz- und Transporteinrichtung in größerem Maßstab,
- Fig. 5: einen Schnitt nach der Linie V-V der Fig. 4.

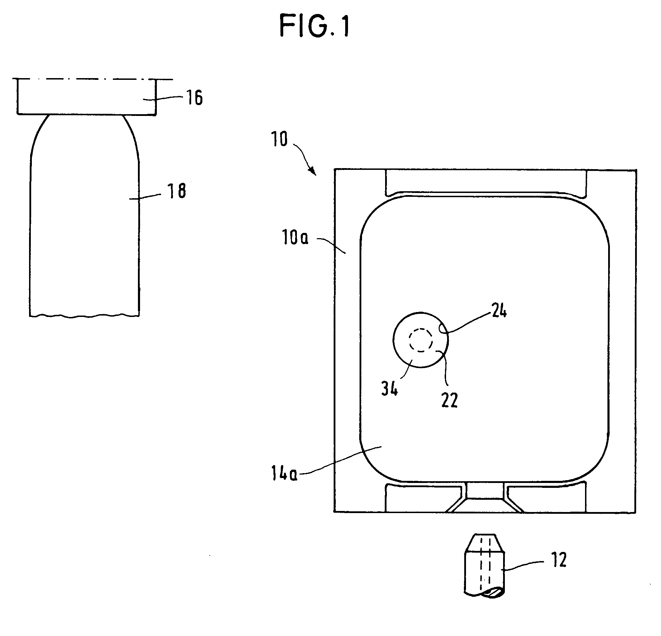

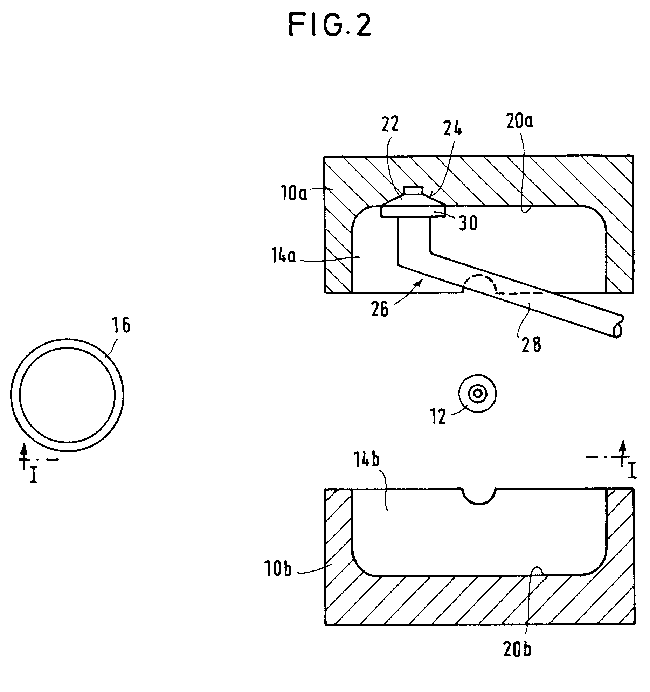

In den Figuren 1 und 2 ist eine Blasform 10 dargestellt, die in üblicher Weise in zwei Hälften 10a, 10b unterteilt ist und mit einem Blasdorn 12 für die Zuführung des Druckmittels zum Aufweiten des Vorformlings zusammenwirkt. In den Fig. 1 und 2 ist die Blasform 10 geöffnet dargestellt. D.h., daß die beiden Blasformhälften 10a, 10b auseinanderbewegt sind und den Zugang zum Blasformnest ermöglichen, welches analog der Unterteilung der Blasform 10 in die beiden Hälften 10a, 10b aus den beiden Hälften 14a, 14b unterteilt ist.

Die Extrusions-Blasvorrichtung weist weiterhin wenigstens einen Extruder mit einem Extrusionskopf 16 auf, aus welchem die Vorformlinge 18 kontinuierlich oder absatzweise extrudiert werden. Es handelt sich dabei um dem Fachmann bekannte und seit Jahrzehnten übliche Einrichtungen und Maßnahmen, so daß in der Zeichnung nur der mit einer Austrittsöffnung für die Vorformlinge 18 versehene Extrusionskopf 16 schematisch angedeutet ist.

Bei der Ausführungsform gemäß Fig. 1 und 2 ist die Blasform 10 in einem Abstand vom Extrusionskopf 16 seitlich neben diesem angeordnet. Bei stationärer Blasform kann der Abstand zwischen Extrusionskopf 16 und Blasform 10 durch einen in der Zeichnung nicht dargestellten Greifer überbrückt werden, der dem jeweils extrudierten Vorformling 18 vom Extrusionskopf 16 abnimmt und in die geöffnete Blasform transportiert. Es ist aber auch möglich, die Blasform 10 zwischen einer Position unterhalb des Extrusionskopfes 16 und der in den Fig. 1 und 2 dargestellten Position hin- und herverschiebbar anzuordnen. Auch hierbei handelt es sich um bekannte Möglichkeiten und Maßnahmen, die jedem Fachmann geläufig sind.

Bei der folgenden Beschreibung des Arbeitsablaufes während eines Arbeitszyklus' wird angenommen, daß der Vorformling 18, sobald er seine für die Herstellung eines Hohlkörpers erforderliche Länge erreicht hat, von einer Greifereinrichtung in die geöffnete, stationäre Blasform 10 transportiert wird. Nachdem der vom Greifer gehaltene Vorformling 18 seine Position innerhalb der geöffneten Blasform 10 erreicht hat, wird der Blasdorn 12 in den unteren, offenen Endabschnitt des Vorformlings 18 hineinbewegt. Danach wird die Blasform 10 durch Zusammenfahren der beiden Blasformteile 10a, 10b um den Vorformling geschlossen, worauf dann durch Einführen von Blasluft unter Überdruck durch den Blasdorn 12 in den Vorformling 18 letzterer bis zur Anlage an der Formwandung 20a, 20b des Formnestes 14a, 14b aufgeweitet wird. Nach einer bestimmten Zeit, die für das Abkühlen des so hergestellten Hohlkörpers erforderlich ist, wird die Blasform 10 geöffnet, um den ausreichend verfestigten Hohlkörper aus der Blasform zu entfernen. Die Figuren 1 und 2 zeigen die Blasform 10 in einer Phase innerhalb des Arbeitszyklus' unmittelbar nach dem Herausnehmen des aufgeweiteten Hohlkörpers aus der Blasform 10.

Der in der Blasform 10 herzustellende Hohlkörper ist mit einem vorgefertigten Zusatzteil 22 zu versehen, welches außenseitig an der Wandung des Hohlkörpers durch eine Schweißverbindung anzubringen ist. Zu diesem Zweck ist innen in der Wandung 20a des Formteils 10a eine Ausnehmung 24 vorhanden, deren Gestalt an die des Zusatzteiles 22 angepaßt ist und einen Sitz für das Zusatzteil 22 bildet.

Zur Anbringung des Zusatzteiles 22 am Hohlkörper wird so vorgegangen, daß am Ende eines Arbeitszyklus', nachdem der darin hergestellte Hohlkörper aus der Blasform 10 entfernt worden ist, das Zusatzteil 20 in den Sitz 24 eingelegt wird. Dies kann manuell, aber auch durch eine besondere, nicht dargestellte Transporteinrichtung geschehen. Danach wird das ggf. vorgewärmte, im Sitz 24 befindliche Zusatzteil 22 an seiner zugänglichen stirnseitigen Oberfläche 34 in Kontakt mit einem Heizelement 30 gebracht, welches Teil einer mit einem Arm 28 versehenen Einrichtung 26 ist, die zwischen einer ersten Position, in welcher das Heizelement 30 an dem im Sitz 24 befindlichen Zusatzteil 22 anliegt, und einer zweiten Position, in welcher sie sich außerhalb des Bewegungsbereiches der Blasformhälften 10a, 10b bei deren Schließbewegung befindet, hin- und herbewegbar ist.

In der ersten, in Fig. 2 dargestellten Position des Heizelementes 30 erfolgt ein Wärmeübergang vom Heizelement 30 auf das Zusatzteil 22, und zwar insbesondere auf dessen stirnseitige Begrenzungsfläche 34, die bei Anordnung des Zusatzteiles 22 im Sitz 24 dem Formnest 14a, 14b zugekehrt ist und bei der in den Fig. 1 und 2 dargestellten Ausgestaltung der Teile mit der Innenwandung 20a des Formnestes fluchtet und somit im Ergebnis einen Teilbereich der das Formnest 14a, 14b begrenzenden Wandung bildet. Die Zeitdauer, während welcher das Heizelement 30 in Kontakt mit der Oberfläche 34 bleibt, hängt ab von dem Ausmaß der Erwärmung des die stirnseitige Oberfläche 34 tragenden Bereiches des Zusatzteiles 22, die erforderlich ist, um eine ausreichend gute Schweißverbindung mit dem im folgenden Arbeitszyklus herzustellenden Hohlkörper zu bewirken. Der in Kontakt mit der stirnseitigen Oberfläche 34 des Zusatzteils 22 befindliche Bereich der Stirnseite des Heizelementes 30 deckt diese Oberfläche 34 gleichzeitig ab, so daß sie vor dem Zutritt von Luftsauerstoff geschützt ist. Nach Erreichen der für das Erzielen der gewünschten Schweißverbindung ausreichenden Temperatur wird die Einrichtung 26 mit dem Heizelement 30 von dem im Sitz 24 befindlichen Zusatzteil weg- und aus der Blasform 10 herausbewegt. Danach kann die Blasform geschlossen werden, wobei vorausgesetzt ist, daß vorher der Vorformling 18 in der bereits beschriebenen Weise durch einen Greifer in die geöffnete Blasform 10 eingebracht worden war. Fig. 2 der Zeichnung läßt erkennen, daß es in Abhängigkeit von der Position des Sitzes 24 und damit von der Lage der Einrichtung 26 beim Erwärmen des Zusatzteiles 22 in vielen Fällen möglich sein wird, den Vorformling 18 in die Blasform einzubringen, ohne daß dieser Vorgang durch den zu diesem Zeitpunkt noch innerhalb der geöffneten Blasform 10 befindliche Einrichtung 26 behindert würde.

Bei einer zwischen der in den Fig. 1 und 2 dargestellten Position und einer Position unterhalb des Extrusionskopfes 16 hin- und herbewegbaren Blasform würde nach dem Herausbewegen der Einrichtung 26 die geöffnete Blasform mit dem darin befindlichen Zusatzteil 22 unter den Extrusionskopf 16 bewegt werden, um dort den mittlerweile extrudierte Vorformling für den folgenden Arbeitszyklus aufzunehmen. Ggf. kann dabei kann die Einrichtung 26 der Blasform bei dieser Bewegung folgen, um die für diese Bewegung erforderliche Zeit noch für das Erwärmen des Zusatzteiles zu nutzen und dessen erwärmte Oberfläche gegen den Sauerstoff der umgebenden Luft abzuschirmen.

Beim anschließenden Aufweiten des Vorformlings 18 zum Hohlkörper wird dessen Wandung unter der Einwirkung des Blasdruckes gegen die ihm zugekehrte Oberfläche 34 des Zusatzteiles 22 gedrückt, wobei aufgrund der Tatsache, daß der Vorformling bzw. der daraus gebildete Hohlkörper zu diesem Zeitpunkt noch in warmplastischem Zustand ist und das gleiche auch für den die Oberfläche 34 tragenden Bereich des Zusatzteiles 22 aufgrund der vorangegangenen Aufheizung gilt, zwischen dem Wandungsbereich des Hohlkörpers, der an der Oberfläche 34 des Zusatzteiles 22 zur Anlage kommt, und letzterem eine Schweißverbindung entsteht, deren Haltbarkeit allen praktischen Erfordernissen genügt. Der bezüglich Temperatur, Zeit und Bereich der Erwärmung genau einstellbare Erwärmungsvorgang vermeidet dabei die Nachteile des Standes der Technik und erlaubt zudem, den Erfordernissen des Materials, aus welchem das Zusatzteil jeweils besteht, insbesondere bezüglich Temperaturhöhe und Erwärmungszeit, Rechnung zu tragen. Das Zusatzteil ist nach Herstellung der Schweißverbindung Bestandteil des Hohlkörpers und wird bei Herausnahme des letzteren aus der Blasform aus dem Sitz 24 entfernt.

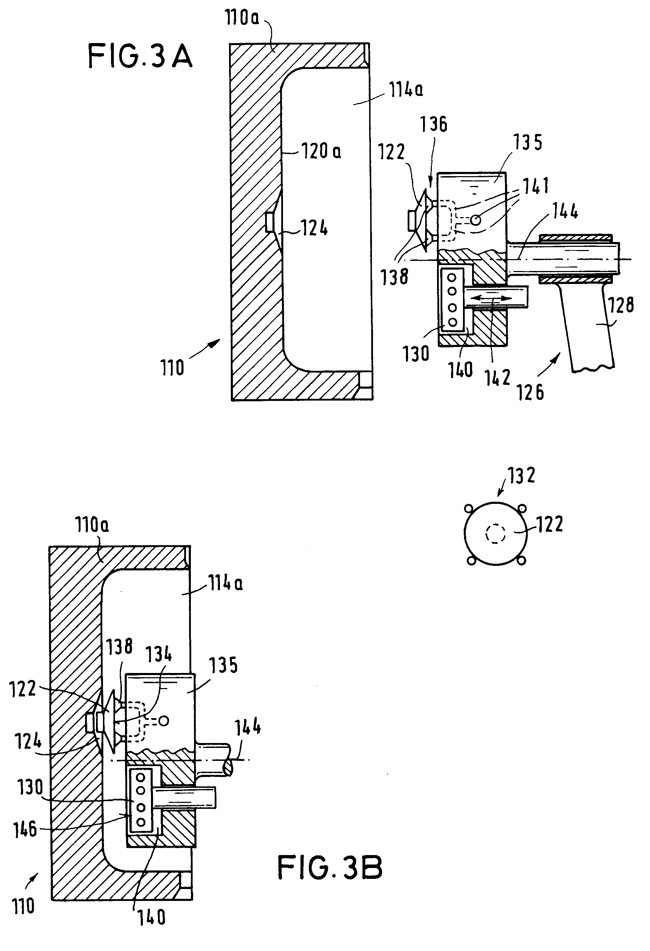

Beim Ausführungsbeispiel gemäß den Fig. 3a - 3f, in denen Teile, die dem Ausführungsbeispiel gemäß den Fig. 1 und 2 entsprechen, mit gleichen, jedoch um 100 höheren Bezugszeichen versehen sind, dient die Einrichtung 126, mittels welcher das Zusatzteil 122 erwärmt wird, zugleich auch dazu, das Zusatzteil von einer Station außerhalb der Blasform, in welcher es ggf. vorerwärmt wird, in den in der Blasform befindlichen Sitz 124 zu transportieren. Zu diesem Zweck ist die Einrichtung 126 mit einem am Tragarm 128 schwenkbar angebrachten Kopf 135 versehen, der einen Halter 136 für ein Zusatzteil 122 sowie ein Heizelement 130 aufweist. Der Halter 136 besteht bei diesem Ausführungsbeispiel aus zwei Saugnäpfen 138, die über Leitungen 141 an eine Unterdruckquelle anschließbar sind.

Das Heizelement 130 ist innerhalb einer Ausnehmung 140 innerhalb des Kopfes 135 in Richtung der Pfeile 142 hin- und herverschiebbar angeordnet. Die dafür erforderlichen Antriebsmittel sind aus Gründen der Übersichtlichkeit in der Zeichnung nicht dargestellt. Der Kopf 135 ist um die Achse 144 am Arm 128 schwenkbar angebracht.

Während des Ablaufs eines Arbeitszyklus' entnimmt die Einrichtung 126 ein Zusatzteil 122 für den folgenden Arbeitszyklus einem Magazin 132, das einen Vorrat an derartigen Zusatzteilen enthalten kann. Es ist möglich, in diesem Magazin 132, das sich in der Nähe der Blasform 110 befindet, eine Vorerwärmung des Zusatzteiles 122 durchzuführen, wobei diese Vorerwärmung jedoch nicht zu einer Plastifizierung oder einer sonstigen Änderung der Eigenschaften des Zusatzteiles 122 führen sollte, die dessen Handhabbarkeit beeinträchtigen.

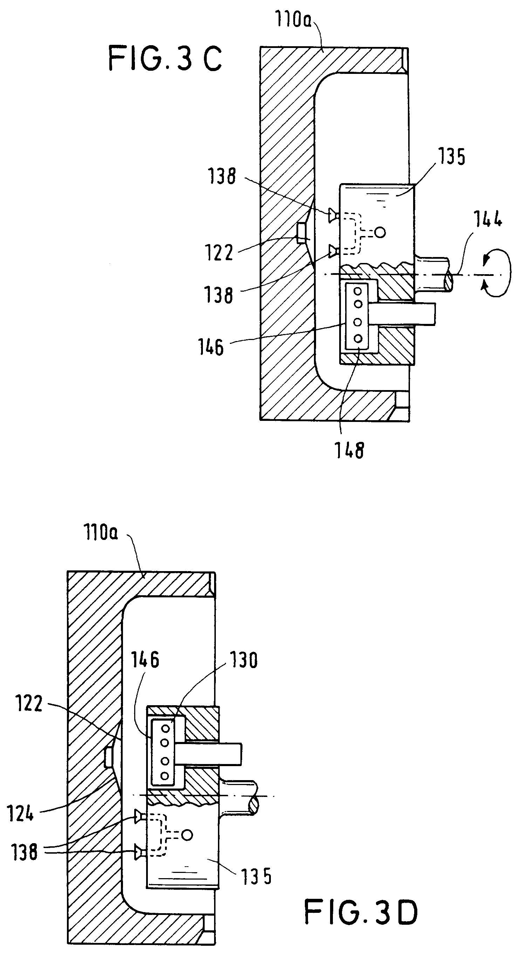

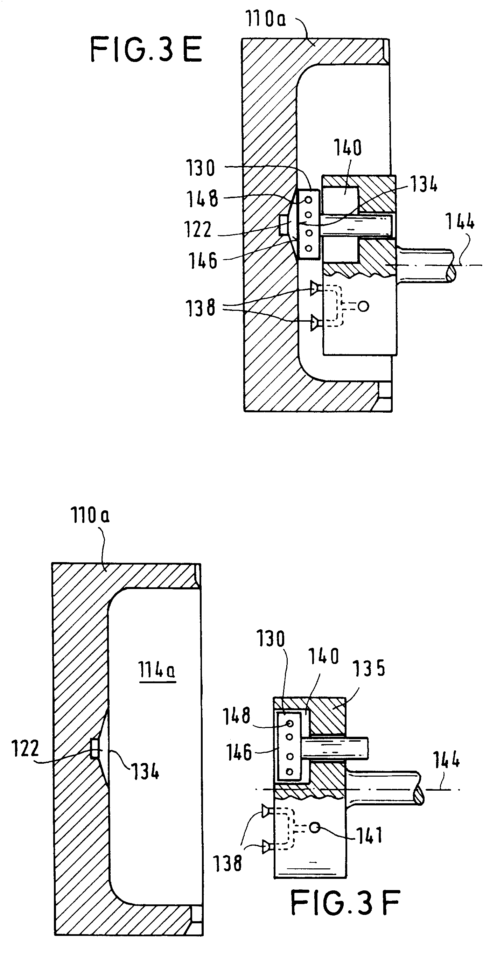

Sobald die Blasform geöffnet und der in in ihr hergestellte Hohlkörper entnommen ist, wird die Einrichtung 126 in die offene Blasform hineinbewegt derart, daß zunächst das vom Kopf 135 getragene Zusatzteil 122 dem in der Formhälfte 110a befindlichen Sitz 124 gegenüberliegt. Diese Zwischenposition ist in Fig. 3a dargestellt. Bei der folgenden, im wesentlichen linearen Bewegung der Einrichtung 126 wird das Zusatzteil 122 in den Sitz 124 eingeschoben. Fig. 3b zeigt eine Position der Teile unmittelbar vor Erreichen der Endposition des Zusatzteiles 122 im Sitz 124. Sobald das Zusatzteil 122 sich im Sitz 124 befindet, wird der über die Leitungen 141 wirkende Unterdruck abgeschaltet, so daß der Kopf 135 in die in Fig. 3c dargestellte Lage zurückbewegt werden kann, ohne daß das Zusatzteil 122 aus dem Sitz 124 herausgezogen würde. Danach wird der Kopf 135 um die Achse 144 in die in Fig. 3d dargestellte Position verschwenkt, in welcher der Heizstempel 130 den im Sitz 124 befindlichen Zusatzteil 122 in einem Abstand gegenüberliegt. Alsdann wird der Heizstempel 130 linear aus der in Fig. 3d dargestellten Position in die Position gemäß Fig. 3e verschoben, in welcher die Stirnfläche 146 des Heizstempels 130 an der stirnseitigen Oberfläche 134 des im Sitz 124 befindlichen Zusatzteiles 122 anliegt. Die Beheizung des Heizstempels 130 erfolgt über Heizdrähte, die bei 148 angedeutet sind. Nach ausreichender Aufheizzeit wird der Heizstempel 130 in die Ausnehmung 140 des Kopfes 135 zurückbewegt. Gleichzeitig damit kann auch die Bewegung der Gesamteinrichtung 126 beginnen, durch die letztere aus dem Bewegungsbereich der beiden Formhälften der Blasform 110 herausbewegt wird. Fig. 3f zeigt den Heizstempel 130 in seiner zurückgezogenen Lage.

Nach dem Entfernen der Einrichtung 126 aus dem Bewegungsbereich der Formhälften, ggf. aber bereits auch früher, kann in der bereits im Zusammenhang mit den Fig. 1 und 2 beschriebenen Weise der Vorformling eingebracht und die Blasform durch Zusammenfahren der beiden Blasformteile geschlossen werden, um den folgenden Hohlkörper herzustellen und dabei das erwärmte Zusatzteil 122 mit diesem Hohlkörper in der bereits beschriebenen Weise zu verbinden.

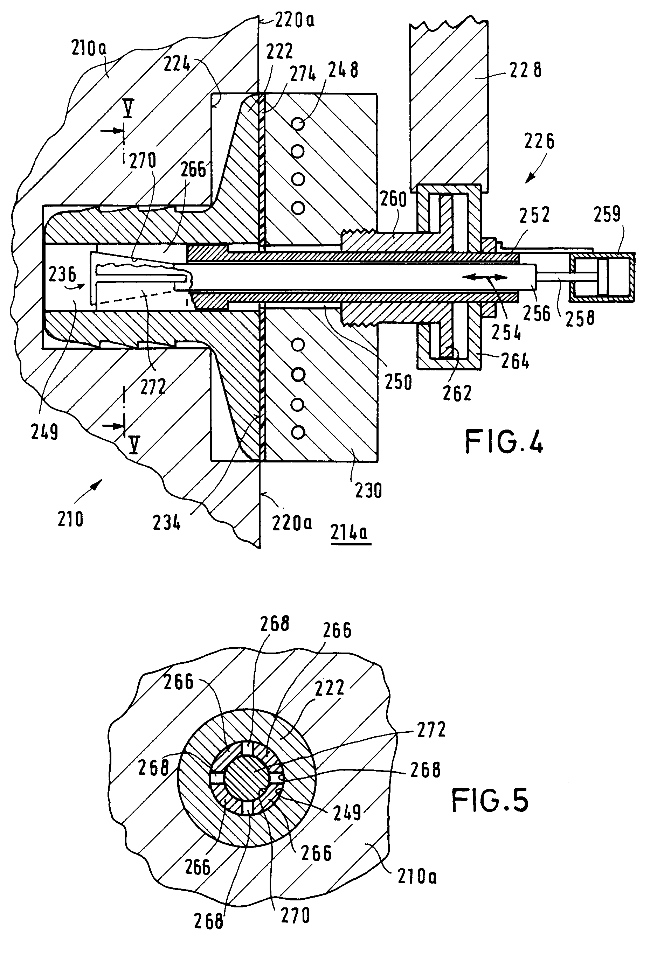

Beim Ausführungsbeispiel gemäß den Fig. 4 und 5 sind Teile, die denen des Ausführungsbeispiels gemäß Fig. 1 und 2 entsprechen, mit gleichen, jedoch um 100 höheren Bezugszeichen versehen.

Der wesentliche Unterschied gegenüber dem Ausführungsbeispiel gemäß Fig. 3a - 3f besteht darin, daß die Halteeinrichtung 236, mittels welcher das Zusatzteil 222 in den Sitz 224 in der Blasformwandung 220a eingelegt wird, in völlig anderer Weise ausgebildet ist. Dies hängt auch mit der Ausbildung des Zusatzteiles 222 zusammen, bei welchem es sich beim Ausführungsbeispiel gemäß den Fig. 4 und 5 um einen Nippel, also um ein hohles Teil mit einem Durchgang 249 handelt. Diese Ausgestaltung des Zusatzteiles 222 gibt die Möglichkeit, zur Halterung desselben für seinen Transport von beispielsweise einem Vorratsmagazin, wie dem Magazin 132 der Fig. 3a, in den Sitz 224 die als Spanndorn ausgebildete Halteeinrichtung 236 in das Zusatzteil 222 eingreifen zu lassen. Dafür ist der Heizstempel 230 mit einer Bohrung 250 versehen, durch die sich der Spanndorn erstreckt. Dieser weist einen Hohlbolzen 252 auf, innerhalb dessen ein in Richtung der Pfeile 254 hin- und herverschiebbarer Betätigungsbolzen 256 geführt ist. Der Betätigungsbolzen 256 ist mit der Kolbenstange 258 einer Zylinder-Kolben-Anordnung 259 verbunden, die von Hohlbolzen 252 getragen wird.

Der Heizstempel 230 wird von einer Hülse 260 getragen, die in einen Abschnitt größeren Durchmessers der Bohrung 250 eingeschraubt und an ihrem dem Heizstempel 230 abgekehrten Ende mit einem Kolben 262 versehen ist, der innerhalb eines Zylinders 264 angeordnet ist. Letzterer wird vom Arm 228 der Einrichtung 226 getragen. Der Hohlbolzen 252 ist innerhalb der Hülse 260 gelagert. An seinem der Kolben-Zylinder-Anordnung abgekehrten Ende trägt er vier Fortsätze 266, die eine mit längsverlaufenden Schlitzen 268 versehene Hülse bilden, deren innere Mantelfläche 270 konisch verläuft derart, daß ihr Durchmesser zum freien Ende der Hülse hin größer wird. Der Betätigungsbolzen 256 ist an seinem der Kolben-Zylinder-Einheit 259 abgekehrten Ende mit einem konusförmigen Teil 272 versehen, dessen Durchmesser in der gleichen Richtung zunimmt wie der Innendurchmesser der von den Fortsätzen 266 definierten inneren Mantelfläche, wobei dieses konische Teil 272 innerhalb der Fortsätze 266 bzw. der von diesen gebildeten geschlitzten Hülse angeordnet ist.

Der Heizstempel 230 ist an seiner der stirnseitigen Oberfläche 234 des Zusatzteiles 222 zugekehrten Seite mit einer Auflage aus einem Material, beispielsweise Glasseide, Silikon, Teflon oder dgl. versehen, das ein Ankleben des Zusatzteiles 222 bei plastifizierter stirnseitiger Oberfläche 234 desselben am Heizstempel 230 verhindert. Die Heizstempel der anderen Ausführungsbeispiele werden normalerweise ebenfalls mit einer solchen Auflage oder Beschichtung versehen sein.

Die in den Fig. 4 und 5 dargestellte Ausführungsform wird in der Weise benutzt, daß zunächst die den Heizstempel 230, die Spannhülse mit Hohlbolzen 252 und Betätigungskolben 256 mit zugehörigen Teilen und Einrichtungen aufweisende Einheit in die Nähe des Vorratsmagazins und/oder einer Station gebracht wird, in welcher das Zusatzteil 222 eine Vorerwärmung erfahren kann. Dort wird zunächst der Spanndorn in den Durchgang 259 des Zusatzteiles 222 eingeführt, bis die dem Zusatzteil 222 gegenüberliegende Fläche des Heizelementes 230 an der Stirnfläche 234 des Zusatzteiles anliegt.

Zum Zeitpunkt des Einführens nimmt der Betätigungskolben 256, bezogen auf die Darstellung der Fig. 4, seine linke Endposition ein, in welcher die Fortsätze 266 nicht gespreizt sind, wobei die von ihnen definierte Hülse einen Außendurchmesser aufweist, der kleiner ist als der Innendurchmesser des Durchgangs 249 im Zusatzteil 222. Sobald diese Teile ihre richtige Lage zum Zusatzteil 222 einnehmen, wird die von den Fortsätzen 266 gebildete geschlitzte Hülse 266 durch entsprechendes Verschieben des konischen Teiles 272 nach rechts gespreizt. Dies erfolgt durch entsprechende Beaufschlagung des Kolbens der Zylinder-Kolben-Einheit 259. Das Zusatzteil 222 sitzt nunmehr fest auf der geschlitzten Hülse 266, wobei, da zu diesem Zeitpunkt bereits der Heizstempel 230 bzw. die Außenfläche von dessen Beschichtung 274 an der stirnseitigen Oberfläche 234 des Zusatzteiles 222 anliegt, bereits während des folgenden Transportvorganges mit der Erwärmung bzw. Weitererwärmung - letzteres im Falle einer bereits stattgefundenen Vorerwärmung - begonnen werden kann. Durch entsprechende Bewegung des Armes 228 wird dann das Zusatzteil in den Sitz 224, also die in Fig. 4 der Zeichnung dargestellte Position gebracht. Im allgemeinen wird es möglich sein, bereits unmittelbar danach durch entsprechende Verschiebung des konischen Teiles 272 nach links - bezogen auf die Darstellung der Fig. 4 - die Verbindung zwischen Schlitzhülse 266 und Zusatzteil 222 zu lösen, so daß nach der erforderlichen Verweilzeit des Heizstempels 230 in Kontakt mit dem Zusatzteil 222 der Heizstempel 230 durch entsprechende Betätigung des Kolbens 262 außer Berührung mit der stirnseitigen Oberfläche 234 des Zusatzteiles 222 gebracht wird. Es ist dann ferner möglich, durch entsprechende Bewegung des Armes 228 den Spreizdorn aus dem Zusatzteil 222 herauszuziehen und die gesamte Einrichtung 226 aus dem Bewgungsbereich der Formteile zu entfernen, so daß danach, sobald der Vorformling seine endgültige Position innerhalb der Blasform eingenommen hat, letztere geschlossen und der Vorformling bis zur Anlage an der Wandung der Blasform und an der Oberfläche 234 des Zusatzteiles 222 aufgeweitet werden kann.

Abweichend von den in der Zeichnung dargestellten Ausführungsformen kann die mit dem Heizelement in Kontakt zu bringende Fläche des Zusatzteiles auch gekrümmt, mit Stufen versehen oder sonstwie unregelmäßig ausgebildet sein. Die Heizfläche des Heizelementes sollte dann daran angepaßt sein.

## Patentansprüche

1. Verfahren zum Herstellen eines mit wenigstens einem Zusatzteil versehenen Hohlkörpers aus thermoplastischem Kunststoff durch Aufweiten eines Vorformlings (18) in einer Blasform (10; 110; 210), die an ihrer inneren Wandung (20a; 120a, 220a) mit einem Sitz (24; 124; 224) versehen ist, in den das Zusatzteil (22; 122; 222) eingelegt wird, wobei ein Bereich der Wandung des Vorformlings bzw. des daraus durch Aufweiten entstehenden Hohlkörpers im Verlauf des Aufweitvorganges in noch warmplastischem Zustand gegen das Zusatzteil (22; 122; 222) gepreßt und durch Haftung mit diesem verbunden wird und das Zusatzteil (22; 122; 222) an wenigstens einem Teilbereich seiner Oberfläche (34; 134; 234), die mit dem durch Aufweiten des Vorformlings entstehenden Hohlkörper eine Schweißverbindung eingeht, auf eine Temperatur erwärmt wird, die das Herstellen einer Haftverbindung zwischen Zusatzteil und Hohlkörper begünstigt, dadurch gekennzeichnet, daß das Zusatzteil (22; 122; 222), spätestens zu dem Zeitpunkt, zu welchem es in den Sitz (24; 124; 224) in der Blasformwandung eingelegt wird, und vor dem vollständigen Aufweiten des Vorformlings (18) an dem wenigstens einem Teilbereich seiner Oberfläche (34; 134; 234), der zu erwärmen ist, mit einem Heizelement (30; 130; 230) in Berührung gebracht wird und der auf eine das Herstellen einer Haftverbindung begünstigende Temperatur zu erwärmende Bereich des Zusatzteiles (22; 122; 222) durch das Heizelement (30; 130; 230) gegenüber der Außenatmosphäre zumindest weitgehend abgedeckt wird.

2. Verfahren nach Anspruch 1, dadurch gekennzeichnet, daß die das Heizelemente (130; 230) tragende Einrichtung (126; 226), die in die geöffnete Blasform (110; 210) hinein- und aus dieser herausbewegt wird, auch dazu verwendet wird, das Zusatzteil (122; 222) in die Blasform einzuführen.

3. Verfahren nach Anspruch 2, dadurch gekennzeichnet, daß die Erwärmung des Zusatzteiles (222) bereits während des Tranports des Zusatzteiles (222) in die Blasform (210) beginnt und im Bedarfsfall nach Einführen des Zusatzteiles in den Sitz (224) fortdauert.

4. Verfahren nach Anspruch 1, dadurch gekennzeichnet, daß für das Einführen des Zusatzteiles (22) in den Sitz (24) in der Blasform (10) und für das Einführen des Heizelementes (30) zum Erwärmen des Zusatzteiles (22) auf eine für die Herstellung einer Haftverbindung günstige Temperatur getrennte Einrichtungen verwendet werden.

5. Verfahren nach Anspruch 1, dadurch gekennzeichnet, daß ein Heizelement (30; 130; 230) verwendet wird, dessen den Wärmeübergang an das Zusatzteil (22; 122; 222) bewirkende Fläche an die damit zusammenwirkende Fläche (34; 134; 234) des Zusatzteiles angepaßt ist.

6. Verfahren nach Anspruch 1, dadurch gekennzeichnet, daß das Heizelement (30; 130; 230) in einer die erwärmte Oberfläche (34; 134; 234) des Zusatzteiles (22; 122; 222) abdeckenden Position gehalten wird bis zu dem Zeitpunkt, zu welchem die Heizeinrichtung im Hinblick auf den Ablauf des Arbeitszyklus' aus der Blasform (10; 110; 210) entfernt werden muß.

7. Verfahren nach Anspruch 1, dadurch gekennzeichnet, daß der während des Erwärmens des Zusatzteiles (222) mit letzterem in Berührung befindliche Bereich des Heizelementes (230) mit einer Auflage (274) aus einem Material versehen ist, welches ein Anhaften des durch den Wärmeübergang erwärmten Bereiches des Einlegeteiles (222) am Heizelement (230) verhindert.

8. Verfahren nach Anspruch 1, dadurch gekennzeichnet, daß das Zusatzteil, bevor es in die Blasform eingebracht wird, eine Vorerwärmung auf eine Temperatur erfährt, bei welcher das das Zusatzteil bildende Material noch keine das Bilden einer Haftverbindung begünstigende Veränderung erfährt.

9. Verfahren nach Anspruch 1, dadurch gekennzeichnet, daß der Vorformling (18) in seiner ersten Wärme verarbeitet wird.

10. Verfahren nach Anspruch 1, dadurch gekennzeichnet, daß Blasteil und Zusatzteil aus einem thermoplastischen Elastomeren verwendet werden.

11. Verfahren nach Anspruch 1, dadurch gekennzeichnet, daß der Blasdruck während des Aufweitens des Vorformlings (18) und/oder nach dem Aufweiten zumindest während eines Teils der Abkühlphase über 10 bar, vorzugsweise 14 - 15 bar, beträgt.

12. Vorrichtung zum Herstellen eines mit wenigstens einem Zusatzteil (22; 122; 222) versehenen Hohlkörpers aus thermoplastischem Kunststoff im Extrusions-Blasverfahren mit einer geteilten Blasform (10; 110; 210), die zum Aufweiten eines Vorformlings (18) dient und innenseitig mit einem Sitz (24; 124; 224), für das Zusatzteil versehen ist, dadurch gekennzeichnet, daß ein Heizelement (30; 130; 230) vorgesehen ist, welches eine mit dem Zusatzteil (22; 122; 222) in Berührung zu bringende Heizfläche aufweist und zwischen dem in seinem Sitz (24; 124; 224) innerhalb der geöffneten Blasform (10; 110; 210) befindlichen Zusatzteil und einer Position, die sich außerhalb der Blasform befindet, hin- und herbewegbar ist.

13. Vorrichtung nach Anspruch 12, dadurch gekennzeichnet, daß dem Heizelement (130; 230) ein Halter (136; 236) zugeordnet ist und Heizelement und Halter von einer gemeinsamen Einrichtung (128, 228) getragen sind, durch die Heizelement (130; 230) und Halter (136; 236) zwischen einer Position vor dem Sitz (124; 224) und einer Position, in welcher sich Heizelement und Halter außerhalb der Blasform befinden, hin- und herbewegt werden.

14. Vorrichtung nach Anspruch 13, dadurch gekennzeichnet, daß bei von dem Halter (236) getragenen Zusatzteil (222) das Heizelement (230) in einer Position relativ zum Halter (236) gebracht werden kann, in welcher das Heizelement am Zusatzteil anliegt.

15. Vorrichtung nach Anspruch 12, daduch gekennzeichnet, daß die Heizfläche des Heizelementes (30; 130; 230) an die Topographie des Oberflächenbereiches (34; 134; 234) des Zusatzteiles, der zu erwärmen ist, angepaßt ist.

16. Vorrichtung nach Anspruch 12, dadurch gekennzeichnet, daß die Heizfläche des Heizelementes (30; 130; 230) an die Konturen des Oberflächenbereiches (34; 134; 234) des Zusatzteiles (22; 122; 222) angepaßt ist, der eine haftende Verbindung mit dem aus dem Vorformling durch Aufweiten der Blasform hergestellten Hohlkörper eingeht.

17. Vorrichtung nach Anspruch 12, dadurch gekennzeichnet, daß das Heizelement (230) mit einer Auflage (274) versehen ist, die ein Anhaften des mit dem Heizelement in Kontakt befindlichen Oberflächenbereiches (234) des Einlegeteiles (222) verhindert.

## Claims

1. A process for the production of a hollow body of thermoplastic material, which is provided with at least one additional portion, by expansion of a preform (18) in a blow molding mold (10; 110; 210) which is provided at its inside wall (20a; 120a, 220a) with a seat (24; 124; 224) into which the additional portion (22; 122; 222) is fitted, wherein a region of the wall of the preform or the hollow body produced therefrom by expansion is pressed in the course of the expansion operation in a still hot-plastic state against the additional portion (22; 122; 222) and connected thereto by adhesion and the additional portion (22; 122; 222), at at least a portion of its surface (34; 134; 234) which involves a welded connection with the hollow body produced by expansion of the preform, is heated to a temperature which promotes the production of an adhesive connection between the additional portion and the hollow body, characterised in that at the latest at the moment in time at which the additional portion (22; 122; 222) is fitted into the seat (24; 124; 224) in the wall of the blow molding mold and prior to complete expansion of the preform (18), the additional portion is brought into contact with a heating element (30; 130; 230) at the at least one portion of its surface (34; 134; 234) which is to be heated, and the region of the additional portion (22; 122; 222) which is to be heated to a temperature which promotes the formation of an adhesive connection is at least substantially covered relative to the outside atmosphere by the heating element (30; 130; 230).

2. A process according to claim 1 characterised in that the means (126; 226) which carries the heating element (130; 230) and which is moved into and out of the opened blow molding mold (110; 210) is also used to introduce the additional portion (122; 222) into the blow molding mold.

3. A process according to claim 2 characterised in that heating of the additional portion (222) already begins during transportation of the additional portion (222) into the blow molding mold (210) and if necessary continues after introduction of the additional portion into the seat (224).

4. A process according to claim 1 characterised in that separate means are used for introducing the additional portion (22) into the seat (24) in the blow molding mold (10) and for introducing the heating element (30) for heating the additional portion (22) to a temperature which promotes the formation of an adhesive connection.

5. A process according to claim 1 characterised in that a heating element (30; 130; 230) is used, whose surface which provides for the transfer of heat to the additional portion (22; 122; 222) is adapted to the surface (34; 134; 234) of the additional portion, which co-operates therewith.

6. A process according to claim 1 characterised in that the heating element (30; 130; 230) is held in a position of covering the heated surface (34; 134; 234) of the additional portion (22; 122; 222) until the time at which the heating means has to be removed from the blow molding mold (10; 110; 210) having regard to the progress of the working cycle.

7. A process according to claim 1 characterised in that the region of the heating element (230) which is in contact with the additional portion (222) during the heating thereof is provided with a coating (274) of a material which prevents the region of the insert portion (222), that is heated by the transfer of heat, from adhering to the heating element (230).

8. A process according to claim 1 characterised in that, before the additional portion is introduced into the blow molding mold, it undergoes preheating to a temperature at which the material forming the additional portion does not yet experience a change which promotes the formation of an adhesive connection.

9. A process according to claim 1 characterised in that the preform (18) is processed in its initial heat.

10. A process according to claim 1 characterised in that a blow molded portion and an additional portion comprising thermoplastic elastomers are used.

11. A process according to claim 1 characterised in that the blow molding pressure is over 10 bars, preferably 14 - 15 bars, during expansion of the preform (18) and/or after expansion at least during a part of the cooling phase.

12. Apparatus for the production of a hollow body of thermoplastic material which is provided with at least one additional portion (22; 122; 222) by an extrusion blow molding process with a divided blow molding mold (10; 110; 210) which serves for the expansion of a preform (18) and which is internally provided with a seat (24; 124; 224) for the additional portion, characterised in that there is provided a heating element (30; 130; 230) which has a heating surface to be brought into contact with the additional portion (22; 122; 222) and is reciprocable between the additional portion disposed in its seat (24; 124; 224) within the opened blow molding mold (10; 110; 210) and a position which is outside the blow molding mold.

13. Apparatus according to claim 12 characterised in that a holder (136; 236) is associated with the heating element (130; 230) and the heating element and the holder are carried by a common device (128, 228) by which the heating element (130; 230) and the holder (136; 236) are reciprocated between a position in front of the seat (124; 224) and a position in which the heating element and the holder are outside the blow molding mold.

14. Apparatus according to claim 13 characterised in that when the additional portion (222) is carried by the holder (236) the heating element (230) can be moved into a position relative to the holder (236), in which the heating element bears against the additional portion.

15. Apparatus according to claim 12 characterised in that the heating surface of the heating element (30; 130; 230) is adapted to the topography of the surface region (34; 134; 234) of the additional portion which is to be heated.

16. Apparatus according to claim 12 characterised in that the heating surface of the heating element (30; 130; 230) is adapted to the contours of the surface region (34; 134; 234) of the additional portion (22; 122; 222) which involves an adhesive connection to the hollow body produced from the preform by expansion in the blow molding mold.

17. Apparatus according to claim 12 characterised in that the heating element (230) is provided with a coating (274) which prevents adhesion of the surface region (234) of the insert portion (222), which is in contact with the heating element.

## Revendications

1. Procédé pour fabriquer un corps creux en matière thermoplastique pourvu d'au moins une pièce rapportée, en mettant en forme par expansion une ébauche (18) dans un moule de soufflage (10; 110; 210) qui présente sur la face interne (20a; 120a; 220a) de sa paroi un logement (24; 124; 224) pour recevoir la pièce rapportée (22; 122; 222), contre laquelle on applique un endroit encore chaud et plastique de la paroi de l'ébauche ou du corps creux réalisé par expansion à partir de celle-ci, ce contact s'effectuant pendant la mise en forme de l'ébauche par expansion, et assurant la fixation par soudage de la pièce rapportée (22; 122; 222) en au moins un endroit de sa surface (34; 134; 234), qui a subi un réchauffement jusqu'à une température propre à favoriser une liaison par soudage entre la pièce rapportée et le corps creux, procédé *caractérisé* en ce que, au plus tard au moment de la mise en place de la pièce rapportée (22; 122; 222) dans le logement (24; 124; 224) ménagé dans la paroi du moule de soufflage, et avant l'expansion complète de l'ébauche de moulage (18), on applique un élément chauffant (30; 130; 230) sur au moins un endroit de la surface (34; 134; 234) à réchauffer sur la pièce rapportée (22; 122; 222), cet endroit qu'il s'agit de réchauffer à une température propice pour réaliser une liaison soudée, se trouvant ainsi protégé par l'élément chauffant (30; 130; 230) contre l'atmosphère ambiante, au moins dans une large mesure.

2. Procédé selon la revendication 1, *caractérisé* en ce que le système à bras mobile (126; 226) qui porte l'élément chauffant (130; 230), et qui sert à introduire cet élément dans le moule de soufflage (110; 210) en position ouverte, et à extraire ensuite cet élément chauffant hors du moule, est également utilisé pour introduire la pièce rapportée (122; 222) dans le moule de soufflage.

3. Procédé selon la revendication 2, *caractérisé* en ce qu'on commence à réchauffer la pièce rapportée (222) dès le mouvement d'introduction de cette pièce dans le moule de soufflage (210), pour poursuivre au besoin ce réchauffage de la pièce rapportée après sa mise en place dans son logement (224).

4. Procédé selon la revendication 1, *caractérisé* en ce qu'on utilise des appareils séparés pour mettre en place la pièce rapportée (22) dans son logement (24) ménagé dans le moule de soufflage (10), et pour y introduire l'élément chauffant (30) qui sert à réchauffer la pièce rapportée (22) à une température propice pour la fixer par soudage.

5. Procédé selon la revendication 1, *caractérisé* en ce qu'on utilise un élément chauffant (30; 130; 230) dont la surface active, qui assure le transfert de chaleur vers la pièce rapportée (22; 122; 222), est adaptée à épouser la forme de la surface correspondante (34; 134; 234) de la pièce rapportée.

6. Procédé selon la revendication 1, *caractérisé* en ce qu'on maintient l'élément chauffant (30; 130; 230) dans une position où il recouvre et protège la face réchauffée (34; 134; 234) de la pièce rapportée, jusqu'au moment où il faut retirer le système de réchauffage hors du moule de soufflage (10; 110; 210), pour la suite du fonctionnement de la machine.

7. Procédé selon la revendication 1, *caractérisé* en ce que la face active de l'élément chauffant (230), qu'on applique sur la pièce rapportée (222) pendant le réchauffage de celle-ci, est pourvue d'un revêtement (274) à base d'une matière anti-adhésive qui empêche un collage sur l'élément chauffant (230) de la matière de la pièce rapportée (222), à l'endroit affecté par le transfert de chaleur.

8. Procédé selon la revendication 1, *caractérisé* en ce que l'on soumet la pièce rapportée à un préchauffage, avant son introduction dans le moule de soufflage, pour la porter à une température où la matière de la pièce rapportée ne subit encore aucun changement d'état favorable à la réalisation d'une fixation soudée.

9. Procédé selon la revendication 1, *caractérisé* en ce que l'on effectue la mise en forme de l'ébauche de moulage (18) dans son premier état de température.

10. Procédé selon la revendication 1, *caractérisé* en ce que l'on utilise une ébauche de moulage et une pièce rapportée en élastomère thermoplastique.

11. Procédé selon la revendication 1, *caractérisé* en ce que l'on utilise, pendant la mise en forme de l'ébauche (18) par expansion, et/ou ensuite pendant au moins une partie de la phase de refroidissement qui fait suite à cette mise en forme, une pression de soufflage supérieure à 10 bars et ayant de préférence une valeur de 14 à 15 bars.

12. Machine pour fabriquer un corps creux en matière thermoplastique pourvu d'au moins une pièce rapportée (22; 122; 222), en opérant par extrusion-soufflage au moyen d'un moule de soufflage (10; 110; 210) en plusieurs parties, ce moule servant à réaliser une mise en forme d'une ébauche (18) par expansion, et présentant intérieurement un logement (24; 124; 224) pour recevoir la pièce rapportée, machine *caractérisée* en ce qu'elle comporte un élément chauffant (30; 130; 230) ayant une surface active prévue pour être appliquée sur la pièce rapportée (22; 122; 222), cet élément chauffant pouvant se déplacer alternativement, entre une position en regard de la pièce rapportée en place dans son logement (24; 124; 224) dans le moule ouvert, et une autre position à l'extérieur du moule.

13. Machine selon la revendication 12, *caractérisée* en ce que l'élément chauffant (130; 230) est disposé sur une monture (136; 236) avec laquelle il est porté par un système commun (128; 228) prévu pour assurer alternativement le déplacement de l'élément chauffant (130; 230) et de la monture (136; 236), entre une position en regard du logement (124; 224) de la pièce rapportée, et une autre position où l'élément chauffant et sa monture sont à l'extérieur du moule de soufflage.

14. Machine selon la revendication 13, *caractérisée* en ce qu'elle comporte des moyens pour amener l'élément chauffant (230) en appui contre la pièce rapportée (222) disposée sur sa monture (236).

15. Machine selon la revendication 12, *caractérisée* en ce que la surface active de l'élément chauffant (30; 130; 230) est adaptée à épouser la forme de la face correspondante (34; 134; 234) de la pièce rapportée, pour réchauffer celle-ci.

16. Machine selon la revendication 12, *caractérisée* en ce que la face active de l'élément chauffant (30; 130; 230) est adaptée à épouser le profil de la face correspondante (34; 134; 234) de la pièce rapportée, à l'endroit prévu pour réaliser une liaison soudée avec le corps creux réalisé à partir de l'ébauche, par expansion de celle-ci dans le moule de soufflage.

17. Machine selon la revendication 12, *caractérisée* en ce que l'élément chauffant (230) est pourvu d'un revêtement anti-adhésif (274), qui empêche un collage sur l'élément chauffant de la matière de la pièce rapportée (222), à l'endroit de la face (234) de cette pièce qui est en contact avec l'élément chauffant.
